# EUROPÄISCHE PATENTSCHRIFT

(11) **EP 1 306 238 B1**
(45) Veröffentlichungstag und Bekanntmachung des Hinweises auf die Patenterteilung: **02.11.2006**
(21) Anmeldenummer: 02016062.8
(22) Anmeldetag: 19.07.2002
(51) Int. Cl.: B60G 17/027, B60G 15/06

(54) **Vorrichtung zur Höhenverstellung**
Height adjustment device
Dispositif de réglage en hauteur

(30) Priorität: 26.10.2001 DE 10153007
(43) Veröffentlichungstag der Anmeldung: 02.05.2003
(73) Patentinhaber: AUDI AG, 85045 Ingolstadt (DE)
(72) Erfinder: Kainz, Peter, 85122 Hitzhofen (DE)

(56) Entgegenhaltungen:
- EP-A- 0 435 704
- WO-A-01/26922
- DE-A- 3 223 195
- DE-A- 19 700 567
- US-A- 3 871 681
- PATENT ABSTRACTS OF JAPAN vol. 007, no. 183 (M-235), 12. August 1983 (1983-08-12) & JP 58 085704 A (KAYABA KOGYO KK), 23. Mai 1983 (1983-05-23)

## Beschreibung

Die Erfindung betrifft eine Vorrichtung zur Höhenverstellung des Aufbaus eines Kraftfahrzeuges, gemäß dem Oberbegriff des Patentanspruches 1.

Bei einer bekannten Vorrichtung (DE 32 23 195 A1) sind die Tragfeder und ein Anschlagspuffer als Zusatzfeder hydraulisch über ein Stellglied relativ zum Aufbau höhenverstellbar angeordnet. Durch diese Höhenverstellung kann die Bodenfreiheit des Kraftfahrzeuges wahlweise oder automatisch vorgegeben werden.

Bei einer weiter bekannten Vorrichtung (Patent Abstracts of Japan Bd. 007, Nr. 183 (M-235) veröffentlicht als JP-A-58085 704) mit den Merkmalen des Oberbegriffs des Anspruchs 1 ist das Stellglied durch einen mit Druck beaufschlagbaren Airbag gebildet, der oberhalb des verstellbaren Kolbens in einem Gehäuseteil angeordnet ist. Dadurch ergibt sich eine ungünstig hohe Bauweise der Vorrichtung in Richtung der Höhenverstellung.

Aufgabe der Erfindung ist es, die vorstehende Vorrichtung hinsichtlich des erforderlichen Bauraums und der Stellfunktion zu verbessern.

Diese Aufgabe wird erfindungsgemäß mit den kennzeichnenden Merkmalen des Patentanspruches 1 gelöst. Vorteilhafte Weiterbildungen der Erfindung sind in den weiteren Patentansprüchen angeführt.

Erfindungsgemäß wird vorgeschlagen, dass der ringförmige Fluidraum des Stellgliedes durch den Führungsabschnitt und den Boden des Kolbens einerseits und durch einen Zylinderabschnitt und einen Flanschabschnitt des gestuft ausgebildeten Gehäuses des Stellgliedes andererseits begrenzt ist.

Damit ergibt sich ein geringer Bauaufwand mit günstigen Einbauverhältnissen bei guter Stellfunktion.

Die Erfindung wird anhand der nachfolgenden Beschreibung eines Ausführungsbeispieles weiter erläutert. Die schematische Zeichnung zeigt in
- Fig. 1: einen Querschnitt durch eine erfindungsgemäße Vorrichtung zur Höhenverstellung des Aufbaus eines Kraftfahrzeuges mit einem in das hydraulische Stellglied integrierten Dämpferlager für den Stoßdämpfer des Federbeins; und
- Fig. 2: die Vorrichtung nach Fig. 1, jedoch mit zur Erhöhung der Bodenfreiheit des Kraftfahrzeuges ausgefahrenem Kolben des Stellgliedes.

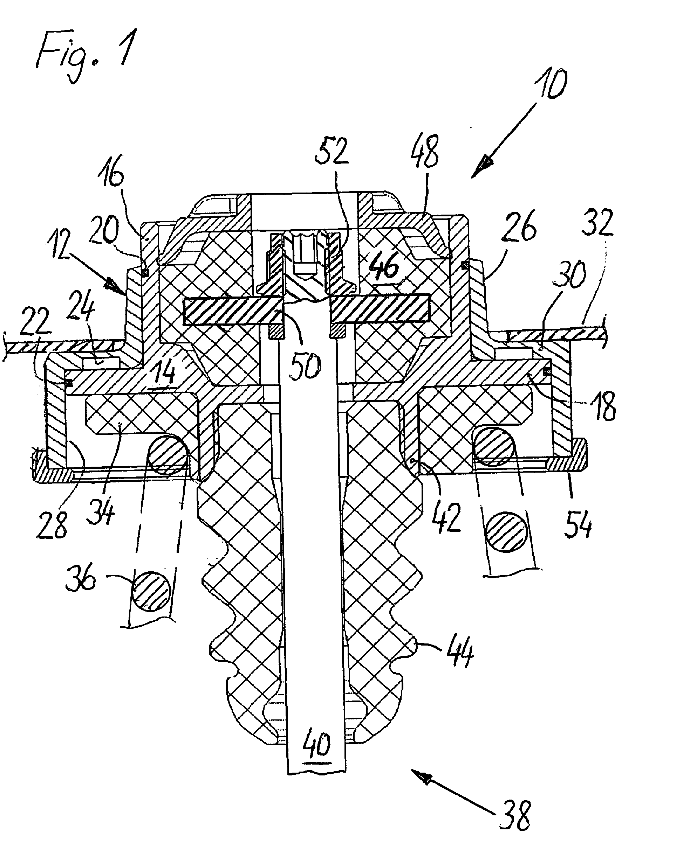

In der Fig. 1 ist eine Vorrichtung zur Höhenverstellung des Aufbaus bzw. der Karosserie eines Kraftfahrzeuges dargestellt, die sich im wesentlichen aus einem fluidbeaufschlagten, insbesondere hydraulisch beaufschlagten Stellglied 10 mit einem Gehäuse 12 und einem darin verschiebbar geführten, ringförmigen Kolben 14 zusammensetzt.

Der Kolben 14 ist mit einem ringförmigen, rotationssymmetrischen Führungsabschnitt 16 und mit dem rotationssymmetrischen Außenumfang 18a eines an den Führungsabschnitt 16 angeformten Bodens 18 jeweils unter Zwischenschaltung einer elastischen Ringdichtung 20,22 in dem im Querschnitt stufenförmigen Gehäuse 12 in entsprechenden zylinderförmigen Abschnitt 26,28 verschiebbar geführt, wobei ein nicht dargestellter Anschluss für die Zufuhr von unter Druck stehendem Hydrauliköl in einen ringförmigen Kanal 24 des die beiden Ringabschnittes 26,28 verbindenden Radialflansches 30 des Gehäuses 12 mündet.

Das Stellglied 10 bzw. dessen Gehäuse 12 ist in nicht dargestellter Weise an dem Aufbau 32 des Kraftfahrzeuges befestigt, z. B. angeschraubt, wobei an dem Gehäuse 12 zugleich Konsolen (nicht dargestellt) zur schwenkbaren Anlenkung von Lenkern der Radaufhängung des Kraftfahrzeuges und Befestigungseinrichtungen wie Gewindelöcher zum Anschrauben eines Lenkgetriebes des Kraftfahrzeuges ausgebildet sind. Das Gehäuse 12 kann auch direkt als eine einstückige Gusskonstruktion mit dem Gehäuse des Lenkgetriebes ausgeführt sein.

An dem Boden 18 des Kolbens 14 ist über einen Dämpfungsring 34 eine Tragfeder bzw. Schraubendruckfeder 36 eines nicht näher dargestellten Federbeines 38 der Radaufhängung des Kraftfahrzeuges abgestützt, welches Federbein 38 sich in bekannter Weise aus einem Teleskopstoßdämpfer mit einer Kolbenstange 40 und der Tragfeder 36 zusammensetzt. Soweit nicht dargestellt ist das Federbein 38 bekannter Bauart.

Ferner ist in einem an dem Boden 18 angeformten Ringkragen 42 ein Anschlagpuffer 44 als Zusatzfeder abgestützt, der bei stärkerem Einfedern der Radaufhängung an dem nicht dargestellten Dämpferzylinder des Stoßdämpfers zur Anlage kommt.

In dem Führungsabschnitt 16 des Kolbens 14 ist ein aus einem ringförmigen Elastomerblock gebildetes Dämpferlager 46 integriert, das zudem an den Boden 18 anliegt und mittels eines am Führungsabschnitt 16 befestigten Deckels 48 fest im Kolben 14 gehalten ist.

An einem mittleren, metallischem Scheibenteil 50 des Dämpferlagers 46 ist die Kolbenstange 40 mittels einer üblichen Schraubverbindung 52 befestigt bzw. abgestützt.

In der Fig. 1 ist das Stellglied 10 in der eingefahrenen (drucklosen) Position gezeichnet, bei der der Aufbau abgesenkt bzw. die Bodenfreiheit des Kraftfahrzeuges am geringsten ist.

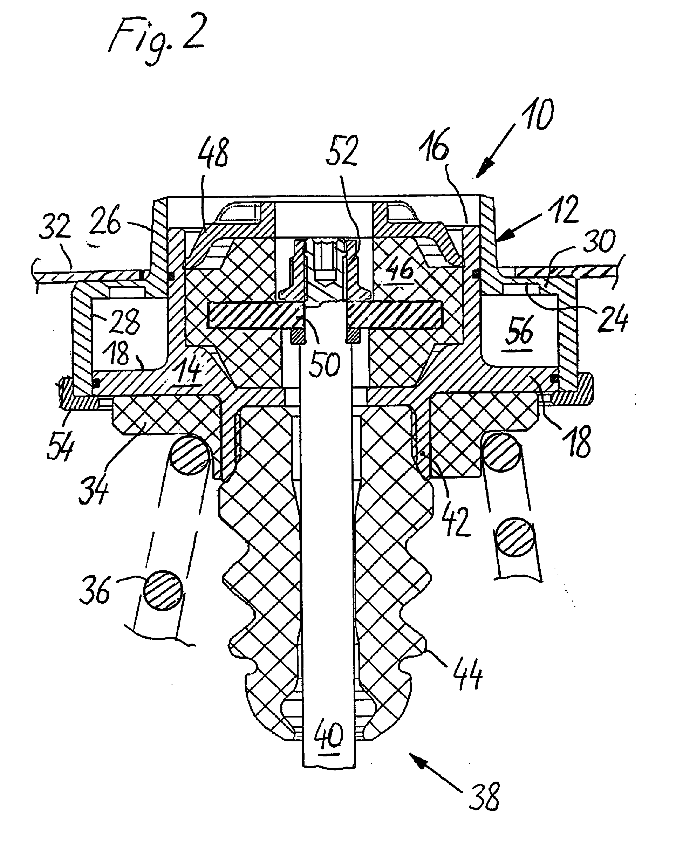

Wird über den nicht dargestellten Hydraulikanschluss und eine entsprechende Druckmittelquelle und ein Steuerventil unter Überdruck stehendes Hydrauliköl zugeführt, so fährt der Kolben 14 in die in Fig. 2 gezeichnete Position aus, bis er an einem am Zylinderabschnitt 28 befestigten Anschlagring 54 zur Anlage kommt. Selbstverständlich sind auch Zwischenstellungen bei entsprechender steuerungstechnischer Auslegung einstellbar.

In der in der Fig. 2 gezeichneten Position hat das Kraftfahrzeug die größte einstellbare Bodenfreiheit. Der ringförmige Fluidraum 56 des Stellgliedes 10 wird dabei wie ersichtlich von dem Führungsabschnitt 16 und dem Boden 18 des Kolbens 14 einerseits und von dem Zylinderabschnitt 28 und dem Flanschabschnitt 30 des Gehäuses 12 andererseits begrenzt.

Wie ohne weiteres ersichtlich ist, wird bei der Verstellung des Kolbens 14 nicht nur die Schraubendruckfeder 36 und der Anschlagpuffer 44, sondern auch das Dämpferlager 46 entsprechend mitverstellt, wodurch die besagten Teile ihre relative Lager zueinander nicht verändern. Daraus resultiert, dass auch Freigänge zwischen diesen Teilen und ggf. auch zu anderen Radaufhängungsteilen unverändert erhalten bleiben.

## Patentansprüche

1. Vorrichtung zur Höhenverstellung des Aufbaus eines Kraftfahrzeuges, mit einer Radaufhängung mit einem aus Tragfeder (36) und Stoßdämpfer (40) bestehendem Federbein (38), wobei die Tragfeder (36) und der Stoßdämpfer (40) über Dämpfungsmittel (34, 46) am Aufbau (32) abgestützt sind und die Tragfeder (36) über ein durch Fluiddruck verstellbares, am Aufbau (32) angeordnetes Stellglied (10) mit einem verschiebbaren Kolben (14) relativ zum Aufbau (32) höhenverstellbar ist und der verstellbare Kolben (14) das Dämpferlager (46) des Stoßdämpfers (40) mitverstellt, wobei
das Dämpferlager (46) in den ringförmigen Kolben (14) des Stellgliedes (10) integriert ist, und
der Kolben (14) einen ringförmigen Führungsabschnitt (16) aufweist, der in einem Zylinderabschnitt (26) des Gehäuses (12) des Stellgliedes (10) verschiebbar geführt ist und das Dämpferlager (46) innerhalb des Führungsabschnittes (16) positioniert ist,
**dadurch gekennzeichnet,**
**dass** der ringförmige Fluidraum (56) des Stellgliedes (10) durch den Führungsabschnitt (16) und den Boden (18) des Kolbens (14) einerseits und durch einen Zylinderabschnitt (28) und einen Flanschabschnitt (30) des gestuft ausgebildeten Gehäuses (12) des Stellgliedes (10) andererseits begrenzt ist.

2. Vorrichtung nach Anspruch 1, **dadurch gekennzeichnet, dass** das Dämpferlager (46) durch einen ringförmigen Elastomerblock gebildet ist, an dem die Kolbenstange (40) des Stoßdämpfers befestigt ist und der zwischen dem Boden (18) des ringförmigen Kolbens (14) und einer an dessen Führungsabschnitt (16) befestigten Deckel (48) gehalten ist.

3. Vorrichtung nach Anspruch 1 oder 2, **dadurch gekennzeichnet, dass** die Ausfahrbewegung des Kolbens (14) durch einen am Gehäuse (12) befestigten Anschlagring (54) begrenzt ist.

4. Vorrichtung nach einem der Ansprüche 1 bis 3, **dadurch gekennzeichnet, dass** am Boden (18) des Kolbens (14) die Tragfeder (36) und ein eine Zusatzfeder bildender Anschlagpuffer (44) abgestützt sind.

5. Vorrichtung nach einem der Ansprüchen 1 bis 4, **dadurch gekennzeichnet, dass** das Stellglied (10) zugleich eine Aufnahmekonsole bildet, die am Aufbau (32) befestigbar ist und die zudem Aufnahmemittel für Funktionsteile der Radaufhängung des Kraftfahrzeuges wie Radführungslenker und/oder ein Lenkgetriebe aufweist.

## Claims

1. A device for adjusting the height of the body of a motor vehicle, with a wheel suspension having a MacPherson strut unit (38) consisting of suspension spring (36) and shock absorber (40), in which the suspension spring (36) and shock absorber (40) are supported against the body (32) via damping means (34, 46), and the suspension spring (36) is vertically adjustable relative to the body (32) via an actuator (10), adjustable by fluid pressure and disposed on the body (32), with a sliding piston (14), and the adjustable piston (14) also adjusts the damper bearing (46) of the shock absorber (40),
the damper bearing (46) being integrated into the annular piston (14) of the actuator (10), and
the piston (14) having an annular guide portion (16) which is displaceable in a cylindrical portion (26) of the housing (12) of the actuator (10), and the damper bearing (46) being positioned inside the guide portion (16),
**characterized in that**
the annular fluid chamber (56) of the actuator (10) is delimited on the one hand by the guide portion (16) and the head (18) of the piston (14), and on the other hand by a cylindrical portion (28) and a flanged portion (30) of the stepped housing (12) of the actuator (10).

2. A device according to Claim 1, **characterized in that** the damper bearing (46) is formed by an annular elastomeric block, to which the piston rod (40) of the shock absorber is fixed and which is held between the head (18) of the annular piston (14) and a cover (48) which is fixed to the guide portion (16) of said piston (14).

3. A device according to Claim 1 or 2, **characterized in that** extension of the piston (14) is limited by a stop ring (54) fixed to the housing (12).

4. A device according to one of Claims 1 to 3, **characterized in that** the suspension spring (36) and a stop buffer (44) forming an auxiliary spring are supported against the head (18) of the piston (14).

5. A device according to one of Claims 1 to 4, **characterized in that** the actuator (10) at the same time forms a receiving bracket, which can be fixed to the body (32) and which further includes means for receiving functional components of the wheel suspension of the motor vehicle, such as wheel radius arms and/or a steering gear.

## Revendications

1. Dispositif de réglage en hauteur de la carrosserie d'un véhicule automobile, avec une suspension de roue avec un ressort de suspension (36) et une jambe d'amortissement (38) constituant un amortisseur de choc (40), à l'occasion de quoi le ressort de suspension (36) et l'amortisseur (40) sont appuyés sur la carrosserie (32) via des moyens d'amortissement (34, 46) et le ressort de suspension (36) est réglable en hauteur par rapport à la carrosserie (32) par l'intermédiaire d'un élément de réglage (10) disposé sur la carrosserie (32) et ajustable grâce à une pression hydraulique avec un piston déplaçable (14), le piston ajustable (14) s'ajustant avec le palier d'amortisseur (46) de l'amortisseur de choc (40), à l'occasion de quoi
le palier d'amortisseur (46) est intégré dans le piston annulaire (14) du vérin (10) et
le piston (14) présente une section de guidage annulaire (16), qui est guidée en étant déplaçable dans une section de cylindre (26) du boîtier (12) de l'élément de réglage (10) et le palier d'amortisseur (46) est positionné à l'intérieur de la section de guidage (16),
**caractérisé en ce que**
l'espace fluidique annulaire (56) de l'élément de réglage (10) est délimité d'une part par la section de guidage (16) et le fond (18) du piston (14) et d'autre part par une section de cylindre (28) et la section de flasque (30) du boîtier (12) développé en étage de l'élément de réglage (10).

2. Dispositif conformément à la revendication 1, **caractérisé en ce que** le palier d'amortisseur (46) est formé par un bloc d'élastomère annulaire, sur lequel est fixée la tige de piston (40) de l'amortisseur de choc et qui est maintenu entre le fond (18) du piston annulaire (14) et un couvercle (48) fixé sur sa section de guidage (16).

3. Dispositif conformément à la revendication 1 ou 2, **caractérisé en ce que** le mouvement de sortie du piston (14) est limité par une bague de butée (54) fixée sur le boîtier (12).

4. Dispositif conformément à l'une des revendications 1 à 3, **caractérisé en ce que** le ressort de suspension (36) et une butée élastique (44) formant un ressort supplémentaire sont appuyés sur le fond (18) du piston (14).

5. Dispositif conformément à l'une des revendications 1 à 4, **caractérisé en ce que** l'élément de réglage (10) forme en même temps une console de réception, qui est fixable sur la carrosserie (32) et qui en outre présente des moyens de réception pour les pièces fonctionnelles de la suspension de roue du véhicule automobile telles un bras oscillant de guidage des roues et / ou un mécanisme de direction.
